# EUROPEAN PATENT APPLICATION

(11) **EP 3 838 414 A1**
(43) Date of publication of application: **23.06.2021**
(21) Application number: 19217031.4
(22) Date of filing: 17.12.2019
(51) Int. Cl.: B01L 7/00, G01J 3/00, G01N 21/64

(54) **REAL-TIME THERMOCYCLER WITH ADJUSTABLE EXCITATION UNIT**

(71) Applicant: Terramark Markencreation GmbH, 28209 Bremen (DE)
(72) Inventor:
(74) Representative: Hofmann, Matthias

(57) **Abstract**

The present disclosure provides a real-time thermocycler, comprising a well for storing a sample, the sample comprising a target and fluorescence molecules, a thermal unit for adjusting a temperature of the sample, an excitation unit for exciting the fluorescence molecules of the sample via radiation, a detection unit for detecting a fluorescence signal from the sample, a controller for controlling the excitation unit to adjust an intensity of the excitation of the fluorescence molecules based on information about the target. The present invention also relates to a method and a computer-readable storage medium.

## Description

### TECHNICAL FIELD

The present invention relates to a real-time thermocycler and a method for thermally cycling a sample, in particular a sample of DNA.

The present invention also relates to a computer-readable storage medium storing program code, the program code comprising instructions for carrying out such a method.

### BACKGROUND

The amplification of nucleic acids, in particular by means of the polymerase chain reaction, has revolutionized the analysis and/or manipulation of nucleic acids from different sources and for a variety of purposes. These include diagnostic medical or clinical applications, forensics, the chemical or biotechnology industries, and genetic engineering, to mention only a few.

Devices for the amplification of nucleic acids are known in the art and are commonly referred to as thermal cyclers. Nowadays, these devices are often integrated parts of complex systems, such as those used in sequencing devices, in particular, in so-called next generation sequencing systems. Next generation sequencing allows the user to produce an enormous number of nucleic acid sequences that are analyzed subsequently or in parallel, i.e. nucleic acid sequences are determined, quantified and, using suitable algorithms, shorter nucleic acid sequence fragments can be assembled allowing to obtain information on larger nucleic acid sequences, the presence, type and quantity of mutations, deletions and/or insertions as compared with sequence information in nucleic acid databases. This technology allows for the analysis of huge nucleic acid sequences, even entire genomes, within hours. It finds application in diagnostics and any other technology or application based on the elucidation of nucleic acid sequences.

Most nucleic acid amplification applications are controlled, i.e. the process of the amplification reaction is monitored as is the qualitative and quantitative determination of the presence or absence of certain nucleic acid sequence targets of interest, e.g., a diagnostically or clinically relevant targets, for example, those derived from infectious agents or from oncogenes. A frequently used means of monitoring the presence or absence of amplified target nucleic acids relies on the use of fluorescently labelled reagents that are incorporated into de novo synthesized nucleic acids. Fluorescent molecules are substances that are attached to nucleotide building blocks that are used as substrates during the synthesis of nucleic acid sequences or intercalate, e.g., when double-stranded nucleic acid sequences are generated. Upon appropriate electromagnetic or radiation stimulation at a certain excitation wavelength, a fluorescent signal is generated that can be measured at the fitting wavelength. It is possible to use different types of molecules that can be stimulated and detected at different wavelengths, as known to the skilled person, and thereby different targets may be distinguished from another. Often the quantity of fluorescence is proportional to or anti-proportional to the extent of specifically amplified target molecules. The simultaneous use of multiple dyes in one well allows detection of several target sequences in parallel.

Real-time thermocyclers are commonly used for, but not limited to, the biochemical reaction for amplification and detection of Deoxyribonucleic acid (DNA) molecules. Examples for the used amplification procedures are the polymerase chain reaction (PCR), the loop-mediated isothermal amplification (LAMP) or the recombinase polymerase amplification (RPA). The amplification of DNA is needed to increase the amount of a specific target DNA sequence. The increase of the target DNA sequence is necessary to detect and sometimes to quantify it. The presence of DNA sequences shows the existence of a target like a virus, bacteria or other, in the used sample.

A real-time thermocycler may comprise a thermal unit for adjusting a temperature of the sample and an optical unit for stimulating and measuring the sample. In particular, the optical unit may comprise an excitation unit for exciting the sample via radiation and a detection unit for detecting radiation, e.g. light, emitted from the sample, e.g. through fluorescence.

Depending on the type and the volume of the sample, completely different amounts of radiation may be emitted from the sample. This can make it difficult to accurately measure the amount of emitted radiation.

### SUMMARY OF THE INVENTION

The objective of the present invention is to provide a real-time thermocycler and a method for thermally cycling of the sample, wherein the real-time thermocycler and the method overcome one or more of the above-mentioned problems of the prior art.

A first aspect of the invention provides a real-time thermocycler, comprising
- a well for storing a sample comprising a target and fluorescence molecules,
- a thermal unit for adjusting a temperature of the sample,
- an excitation unit for exciting the fluorescence molecules of the sample via radiation,
- a detection unit for detecting a fluorescence signal from the sample,
- a controller for controlling the excitation unit to adjust an intensity of the excitation of the sample based on information about the target.

The real-time thermocycler of the first aspect has the advantage that the excitation of the sample may be adjusted such based on information about the sample such as a type of the target or a volume of the sample. For example, if there is a higher volume of the sample and it is expected that the type of the target is such that it generates a strong fluorescence signal, a weaker excitation may be used. Thus, it can be avoided that the signal measured from the sample is too strong.

Exciting the fluorescence molecules of the sample can be performed in each cycle that the real-time thermocycler performs, correspondingly also the detection can be performed in each cycle.

Because the real-time thermocycler adjusts the intensity of the excitation, it can use fixed sensitivity settings for the detector, i.e., it is not necessary to adjust the sensitivity. However, there may also be embodiments where both the excitation intensity and a sensitivity of the detector are adjusted.

The real-time thermocycler may use one or more excitation frequencies and/or one or more detection frequencies.

In a first implementation of the real-time thermocycler according to the first aspect, the controller is configured to control the excitation unit to adjust also a duration of the excitation signal.

For example, the duration of the excitation signal can be changed between 1 ms and 5 ms.

In a second implementation of the real-time thermocycler according to the first aspect as such or according to the first implementation of the first aspect, the controller is configured to adjust the excitation based on information about a type of the target obtained from a database.

For example, the database can comprise a table which indicates for each type of target the excitation intensity to be used with this sample. In a preferred embodiment, the table separately indicates the duration and the intensity of the excitation signal to be used with the sample.

In a further implementation, the real-time thermocycler further comprises a graphical user interface for entering information about the type of the target in the database. The information about the type of the target can be for example the name of the type. In other embodiments, the user may directly enter the desired strengths, e.g. the desired intensity and/or duration, of the excitation signal.

In a further implementation, the excitation unit comprises at least two emitters, in particular at least two light-emitting diodes. This has the advantage that a first one of the two emitters may be designed for low-intensity excitation and a second one of the two emitters may be designed for high-intensity excitation. Thus, e.g. depending on the type of the sample, a different emitter may be used for excitation of the sample.

In a further implementation, the controller is configured to determine an adjustment of the intensity of the excitation of a current sample based on a previously detected fluorescence signal from a previous sample of a same type as the current sample. In some cases, the user may know the type of the target, but it may not yet be known, what the preferred excitation strength for this target is. In particular, it may not be known how strong the fluorescence is for this type of target. Thus, the real-time thermocycler of this implementation may store the detected signal for a previous sample of the same type and adjust the excitation strength for a new target of the same type accordingly. For example, if it was previously determined that for a first target of a certain type a standard excitation signal yields a detection signal that is higher than desired, the excitation signal may be adjusted to be of a lower strength for a new target of the same type. This implementation has the advantage that the real-time thermocycler can automatically learn suitable excitation strengths.

In a further implementation, the real-time thermocycler further comprises a type detection unit for detecting a type of the target based on a type measurement of the sample. This has the advantage that the user does not need to manually enter information about the type of the target.

In a further implementation, the type detection unit comprises an optical sensor. Thus, the real-time thermocycler may determine, based on a visual appearance and/or a further optical signal emitted from the sample, what the type of the target is. In other embodiments, other sensors for determining the type of the target can be used.

In a further implementation, the excitation unit and/or the detection unit are mounted on a moveable arm that is configured to move the excitation unit and/or the detection unit between a plurality of wells. Preferably, light wave guides can be used to guide the light from and/or to the well.

A second aspect of the invention provides a method for thermally cycling and detecting a first sample comprising a target and fluorescence molecules and a second sample comprising a target and fluorescence molecules, the method comprising:
- thermally cycling the first sample and exciting the fluorescence molecules of the first sample with radiation of a first excitation strength,
- thermally cycling the second sample and exciting the fluorescence molecules of the second sample with radiation of a second excitation strength,
wherein the first excitation strength is chosen differently from the second excitation strength based on information about the first and the second target.

The methods according to the second aspect of the invention can be performed by the real-time thermocycler according to the first aspect of the invention. Further features or implementations of the method according to the second aspect of the invention can perform the functionality of the real-time thermocycler according to the first aspect of the invention and its different implementation forms.

The first and the second sample can be thermally cycled at the same time, but in different wells or the thermally cycling of the first and second samples can be performed at different times.

In a first implementation of the method of the second aspect, the method further comprises:
- obtaining information about the first and the second target,
- storing the obtained information about the first and the second target in a database, and
- adjusting the excitation intensity based on the information from the database.

In a second implementation of the method of the second aspect, the obtaining the information about the first and second sample is performed by performing a measurement of the targets of the first and second sample, wherein in particular the performing the measurement includes measuring a fluorescence signal from the first and/or second sample.

In a second implementation of the method of the second aspect, the method further comprises moving an excitation unit and/or a detection unit between a first well of the first sample and a second well of the second sample.

A third aspect of the invention refers to a computer-readable storage medium storing program code, the program code comprising instructions that when executed by a processor carry out the method of the second aspect or one of the implementations of the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a block diagram illustrating a real-time thermocycler in accordance with an embodiment of the present invention,
- FIG. 2: is a block diagram illustrating a further real-time thermocycler in accordance with a further embodiment of the present invention, and
- FIGs. 3a and 3b: are diagrams of experimental results obtained with real-time thermocyclers in accordance with the present invention.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

For real-time thermocyclers, the relevant information and the result are typically not contained in one measurement. There are several periodic measurements, typically between 30 and 50, to monitor a change in signal during amplification. The change of the signal over time shows the required result. Typically, the single measurements are plotted in a graph showing the signal over the cycle or time. The single measurement points are linked and sometimes fitted to form a curve.

In general, a positive result of a PCR shows a more or less sigmoidal form. There is a baseline fluorescence at the beginning, a rise of the signal and the end fluorescence. The signal rises as soon as the number of amplified DNA is so high that a signal can be detected. This is important for the analysis of data. A rise shows the presence of a target DNA and furthermore from the moment of the rise conclusions can be drawn to the amount of sample. If this rise is early, there was a high amount of target DNA at the beginning. A late rise of signal shows a small starting amount. It takes longer until there is amplified enough target DNA. After the rising point, the amplification of DNA continues and the signal rises further. The rise becomes a steady signal, when the amplification is almost finished and the reaction chemistry is used up. If there is no target DNA in the sample, there will be no rising of the signal and therefore a steady horizontal line as result.

For analysis the offset (baseline) of the resulting curve may be subtracted and further calculations can be done to smooth the curves. The subtraction of the offset can be done for easier comparison of the curves. If they all start at zero, they can be analyzed e.g. via setting a threshold.

The combination of an optical unit with a thermal unit realizes a real-time cycler for amplification and detection of DNA molecules. Amplification of the specific nucleic acid is performed in small reaction vessels called wells. Typically, eight times twelve wells are arranged in a pattern to form a 96-well microtiter plate adapter. There are instruments with other numbers or configurations of wells and there are instruments which use individual tubes. Two important units of a real-time thermocycler are the optical and the thermal unit. Of course a real-time thermocycler may comprise other components such mechanics, electronics, firmware and software.

The amplification of DNA can be done via biochemical reagents which need specific temperatures. Regarding the thermal requirements, some procedures need cycling of different temperature steps, other procedures are isothermal. Typically, the needed temperatures range from 35 °C to 95 °C depending on the application. In general, heating and cooling is necessary. Peltier elements or air may be used for tempering the reagents. There are other methods such as heating via magnetic induction. A very accurate control of the temperature is necessary because the biochemical process is very sensitive to temperatures.

One way to detect the result of amplification is via fluorescence detection. Fluorescence is generally stimulated by an electromagnetic radiation. The radiation is absorbed by the fluorescent molecule. The fluorescence molecules are also called fluorescence dyes. After absorption the molecule emits radiation which may be a fluorescence signal that can be detected by a detector. The emitted signal is preferably in a different wavelength range than the excitation radiation. Therefore the excitation and emission radiation can be distinguished. Exposing a sample to an excitation radiation and detecting the emitted radiation is part of the field of fluorometry which is known to the art.

The optical unit for the measurement of signals uses light source for excitation and a detector for detection of the fluorescence signals. Special optical components, such as an optical filter, can be used to provide light of the appropriate wavelength for excitation and detection and to distinguish between the excitation light and the signal. Each fluorescence dye has a specific spectrum. In one well might be several different fluorescence dyes for different targets. That is why different dyes must be excited and detected separately. Typically, there are one to four different fluorescence dyes per well but there can be more. There can be one or several excitation sources and detectors. Suitable light sources can be for example LEDs, laser, halogen lamps or the like. Examples for detectors are photodiodes, photomultiplier, charge-coupled devices (CCD) and others. Mechanical and optical components are needed to bring the excitation light to the reagents and the signal to the detector.

There are several possibilities for excitation and detection principles such as illuminating and detecting the whole plate, scanning of the wells, one source and detector for each well, bringing the tubes to the optical system and others.

The measured fluorescence intensity may vary significantly between different biological reagent mixtures and between different technical devices. This variation may lead at the detection unit to poor results or results which are difficult to analyze. For optimum detection, the detected signal should be in the middle working range of the detection unit. Most detectors are not linear but have a specific working range. If the to-be-detected signal is too high the detector may saturate. A too low signal may be very noisy. The optical units, installed in existing real-time cyclers, are very diverse, as described above. Each optical unit has a unique working range, some are very sensitive, others can detect even high fluorescence signals. This diversity has a huge influence on the detected samples. There are some samples which are clearly detected in one system, but are very low and noisy in another one. The other way around, high fluorescence signals may be saturated in one system and correctly detected in another one.

Regarding the reaction mixtures for the biochemical reactions, they are very diverse in their composition and the concentration of their ingredients. Therefore, the intensity of the fluorescence signal itself may vary considerably. The intensity of the baseline fluorescence and of the end fluorescence in each individual well for each individual dye can be different depending on the properties of the reagent mixture in the well. To adapt the reagent mixture to get higher or lower fluorescence signals is very complex or sometimes not possible.

In most real-time cyclers a fixed setting is used for the intensity of the excitation source and for the sensitivity of the detector. To detect all signals clearly, a detector must have a very broad detection range. Still the analysis might be difficult because the intensities of the results vary a lot.

To compensate for different heights of fluorescence signal intensities, the real-time thermocycler can have the possibility to change the settings of the excitation source or the detector. The detector can for example be adapted by changing the gain of a photomultiplier or the integration time of a camera, to bring the fluorescence signal within the correct range of the detector. In this case the fluorescence signal is modified after its generation. This helps preventing saturated signals or to increase the intensity of very low and noisy signals, but these changes affect all samples in one run equally. The potentially huge differences in fluorescence signal intensity between individual samples will nevertheless remain. Therefore, the applied settings are a compromise to generate a best fit in terms of fluorescence signal intensity over all samples, rather than improving each signal individually.

Prior art real-time thermocyclers face the challenge of variable fluorescence intensities between different targets. This can be overcome by adapting the excitation intensity for each well and fluorescence dye individually, thus allowing optimal signal improvement for low and high signals. This way all signals can be adjusted to be within the linear range of the detector and the differences in signal intensities will be reduced. This simplifies the analysis of the resulting amplification curves.

Preferably, an excitation source is used which is able to adjust its excitation intensity in the range of milliseconds. For the detector no change in sensitivity or other settings is necessary, because the signal intensities are adjusted by the excitation. To handle the settings, control the excitation source and the detector and to manage the data from the optical unit suitable electronic elements can be used.

To prevent that the user has enter value of the excitation intensity for every dye in every well, the excitation intensity can be automatically chosen, depending on the used target. The user enters the target for a well, and the parameter for the optics are automatically chosen from a database.

Thus, before a new reagent mixture can be measured automatically, the correct settings are provided to the system. The correct excitation intensity for a reaction mixture can be determined once by measurement and then stored in the database for future use.

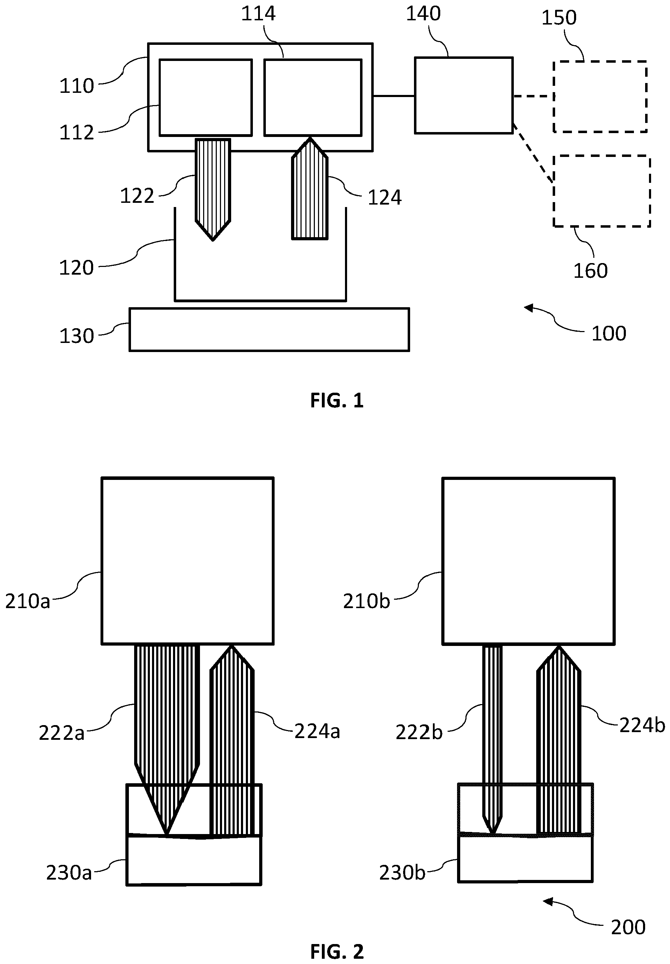

FIG. 1 is a schematic illustration of a real-time thermocycler 100. The real-time thermocycler 100 comprises an optical unit 110, a well 120, a thermal unit 130, and a controller 140. The optical unit 110 comprises an excitation unit 112 and a detection unit 114. The excitation unit 112 is configured to excite fluorescence molecules of a sample in the well 120 through radiation 122. The detection unit 114 is configured to detect a fluorescence signal 124 from the sample in the well 120.

The thermal unit 130 is arranged next to the well 120 and configured to adjust a temperature of the sample in the well 120. The optical unit 110 is connected to a controller 140. The controller 140 is configured to control the excitation unit 112 to adjust an intensity of the excitation of the fluorescence molecules of the sample based on information about the target.

The real-time thermocycler 100 optionally (as indicated by dashed lines in FIG. 1) comprises a database 150 and/or a user interface 160. The database 150 may comprise information about the sample. The user interface 160 may be configured to let a user enter the information about the sample.

FIG. 2 is an illustration of a further real-time thermocycler 200. The real-time thermocycler 200 may be the real-time thermocycler 100 shown in FIG. 1, but only some components are shown in figure 2. The real-time thermocycler 200 comprises a first optical unit 210a, which is configured to send a strong excitation signal 222a to a sample in the well 230a. The optical unit 210a measures a strong fluorescence signal 224a from the sample. The real-time thermocycler 200 further comprises a second optical unit 210b, which is configured to send a weaker excitation signal 222b to a second sample in the second well 230b. Since the second sample has stronger fluorescence properties, a second fluorescence signal 224b, which is similar in strength to the first fluorescence signal 224a is emitted from the sample and measured at the optical unit 210b.

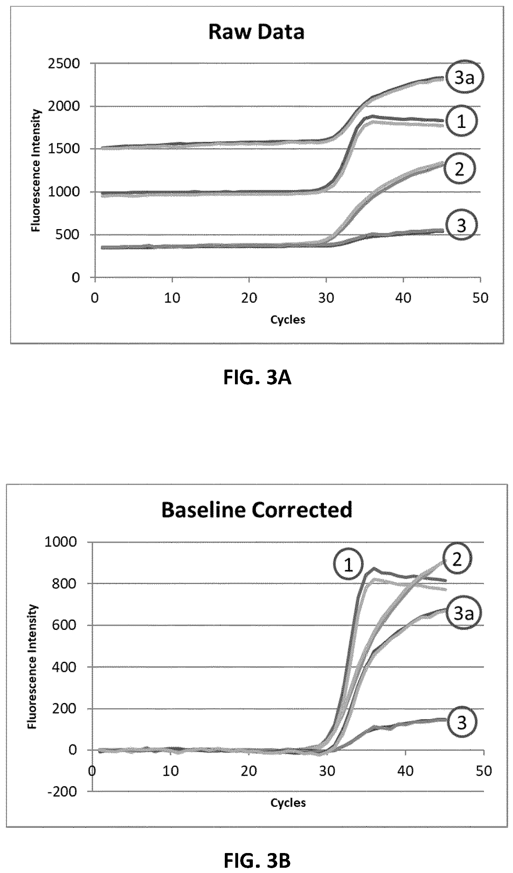

FIGs. 3a and 3b illustrate experimental results obtained with a real-time thermocycler in accordance with the present invention.

A PCR run with 45 cycles was performed. Three different targets were used for the experiment. The targets were in separate wells but they all used the same fluorescent dye. Several replicates were done which are very similar. Due to clarity, only one curve per target is shown in the graphs in FIG. 3a and FIG. 3b. All targets are measured with the same power of the excitation source. Furthermore replicates of target three are measured with a four times higher excitation power.

In the graphs the fluorescence signals over the amplification cycles are shown. The single measurement points are linked to form a curve. The curves from target 1 are labeled with 1 in the graph. For target 2 and target 3 it is done likewise but the curves with higher excitation power are labeled with 3a.

In FIG. 3a and FIG. 3b raw fluorescence signals are shown. The variability of the different curves are explicit: Curve 1 has a high baseline fluorescence and a high end fluorescence. Curve 2 shows a low baseline fluorescence, but a high end fluorescence whereas for curve number 3 baseline and end fluorescence are low. Curve 3a has a high baseline and end fluorescence.

In comparison to curve 3 the curve 3a has a much higher fluorescence intensity, which results from the higher excitation power. Regarding the detector, curve 3a is in the middle range, whereas curve 3 is in a very low range. The whole detector range is from 0 to 4000. The signals of target 2 reach from a low to a high fluorescence intensity. They can also be optimized regarding the range of the detector.

For analysis usually the baseline is subtracted to normalize the curves. This allows comparing the different curves regarding the point of rising of the signal. In FIG. 3b the data from FIG. 3a are shown with normalized baseline. The end fluorescence intensities of curves 1, 2 and 3a are in a similar range, whereas the end fluorescence of curve 3 is much lower. Regarding this example it is clearly visible that it is easier to analyze the curves if they have a comparable height especially if a threshold is used.

## Claims

1. A real-time thermocycler (100, 200), comprising:
- a well (120, 230a-b) for storing a sample comprising a target and fluorescence molecules,
- a thermal unit (130) for adjusting a temperature of the sample,
- an excitation unit (112) for exciting the fluorescence molecules of the sample via radiation,
- a detection unit (114) for detecting a fluorescence signal (124, 224a-b) from the sample, and
- a controller (140) for controlling the excitation unit (112) to adjust an intensity of the excitation of the sample based on information about the target.

2. The real-time thermocycler (100, 200) of one of the previous claims, wherein the controller (140) is configured to adjust the excitation based on information about a type of the target obtained from a database (150).

3. The real-time thermocycler (100, 200) of claim1, further comprising a graphical user interface (160) for entering information about the type of the target in the well (120, 230a-b) in the database (150).

4. The real-time thermocycler (100, 200) of one of the previous claims, wherein the excitation unit (112) comprises at least two emitters, in particular at least two light-emitting diodes.

5. The real-time thermocycler (100, 200) of one of the previous claims, wherein the controller (140) is configured to determine an adjustment of the intensity of the excitation of a current sample based on a previously detected fluorescence signal (124, 224a-b) from a previous sample comprising a same type of target as the current sample.

6. The real-time thermocycler (100, 200) of one of the previous claims, wherein the excitation unit (112) and/or the detection unit (114) are mounted on a moveable arm that is configured to move the excitation unit and/or the detection unit between a plurality of wells (120, 230a-b).

7. A method for thermally cycling and detecting a first sample comprising a target and fluorescence molecules and a second sample comprising a target and fluorescence molecules, the method comprising:
- thermally cycling the first sample and exciting the fluorescence molecules of the first sample with radiation of a first excitation intensity, and
- thermally cycling the second sample and exciting the fluorescence molecules of the second sample with radiation of a second excitation intensity,
wherein the first excitation intensity is chosen differently from the second excitation intensity based on information about the first and the second target.

8. The method of claim 7, further comprising:
- obtaining information about the first and the second target,
- storing the obtained information about the first and the second target in a database (150), and
- adjusting the excitation intensity based on the information from the database (150).

9. The method of claim 8, wherein the obtaining the information about the first and second sample is performed by performing a measurement of the first and the second target, wherein in particular the performing the measurement includes measuring a fluorescence signal from the first and/or second sample.

10. A computer-readable storage medium storing program code, the program code comprising instructions that when executed by a processor carry out the method of one of claims 7 to 9.

## Amended claims

### Amended claims in accordance with Rule 137(2) EPC.

**1.** A real-time thermocycler (100, 200), comprising:
- a well (120, 230a-b) for storing a sample comprising a target and fluorescence molecules,
- a thermal unit (130) for adjusting a temperature of the sample,
- an excitation unit (112) for exciting the fluorescence molecules of the sample via radiation, and
- a detection unit (114) for detecting a fluorescence signal (124, 224a-b) from the sample,
**characterized in that** the real-time thermocycler further comprises:
- a controller (140) for controlling the excitation unit (112) to adjust an intensity of the excitation of the sample based on information about the target, such that the fluorescence signal is in a linear working range of the detection unit.

**2.** The real-time thermocycler (100, 200) of one of the previous claims, wherein the controller (140) is configured to adjust the excitation based on information about a type of the target obtained from a database (150).

**3.** The real-time thermocycler (100, 200) of claim 1, further comprising a graphical user interface (160) for entering information about the type of the target in the well (120, 230a-b) in the database (150).

**4.** The real-time thermocycler (100, 200) of one of the previous claims, wherein the excitation unit (112) comprises at least two emitters, in particular at least two light-emitting diodes.

**5.** The real-time thermocycler (100, 200) of one of the previous claims, wherein the controller (140) is configured to determine an adjustment of the intensity of the excitation of a current sample based on a previously detected fluorescence signal (124, 224a-b) from a previous sample comprising a same type of target as the current sample.

**6.** The real-time thermocycler (100, 200) of one of the previous claims, wherein the excitation unit (112) and/or the detection unit (114) are mounted on a moveable arm that is configured to move the excitation unit and/or the detection unit between a plurality of wells (120, 230a-b).

**7.** A method for thermally cycling and detecting a first sample comprising a target and fluorescence molecules and a second sample comprising a target and fluorescence molecules, the method comprising:
- thermally cycling the first sample and exciting the fluorescence molecules of the first sample with radiation of a first excitation intensity, and
- thermally cycling the second sample and exciting the fluorescence molecules of the second sample with radiation of a second excitation intensity,
**characterized in that** the first excitation intensity is chosen differently from the second excitation intensity based on information about the first and the second target, such that the fluorescence signal is in a linear working range of a detection unit of the real-time thermocycler (100, 200).

**8.** The method of claim 7, further comprising:
- obtaining information about the first and the second target,
- storing the obtained information about the first and the second target in a database (150), and
- adjusting the excitation intensity based on the information from the database (150).

**9.** The method of claim 8, wherein the obtaining the information about the first and second sample is performed by performing a measurement of the first and the second target, wherein in particular the performing the measurement includes measuring a fluorescence signal from the first and/or second sample.

**10.** A computer-readable storage medium storing program code, the program code comprising instructions that when executed by a processor carry out the method of one of claims 7 to 9.

**1.** A real-time thermocycler (100, 200), comprising:
- a well (120, 230a-b) for storing a sample comprising a target and fluorescence molecules,
- a thermal unit (130) for adjusting a temperature of the sample,
- an excitation unit (112) for exciting the fluorescence molecules of the sample via radiation,
- a detection unit (114) for detecting a fluorescence signal (124, 224a-b) from the sample, and
- a controller (140) for controlling the excitation unit (112) to adjust an intensity of the excitation of the sample based on information about the target, such that the fluorescence signal is in a linear working range of the detection unit.

**2.** The real-time thermocycler (100, 200) of one of the previous claims, wherein the controller (140) is configured to adjust the excitation based on information about a type of the target obtained from a database (150).

**3.** The real-time thermocycler (100, 200) of claim 1, further comprising a graphical user interface (160) for entering information about the type of the target in the well (120, 230a-b) in the database (150).

**4.** The real-time thermocycler (100, 200) of one of the previous claims, wherein the excitation unit (112) comprises at least two emitters, in particular at least two light-emitting diodes.

**5.** The real-time thermocycler (100, 200) of one of the previous claims, wherein the controller (140) is configured to determine an adjustment of the intensity of the excitation of a current sample based on a previously detected fluorescence signal (124, 224a-b) from a previous sample comprising a same type of target as the current sample.

**6.** The real-time thermocycler (100, 200) of one of the previous claims, wherein the excitation unit (112) and/or the detection unit (114) are mounted on a moveable arm that is configured to move the excitation unit and/or the detection unit between a plurality of wells (120, 230a-b).

**7.** A method for thermally cycling and detecting a first sample comprising a target and fluorescence molecules and a second sample comprising a target and fluorescence molecules, the method comprising:
- thermally cycling the first sample and exciting the fluorescence molecules of the first sample with radiation of a first excitation intensity, and
- thermally cycling the second sample and exciting the fluorescence molecules of the second sample with radiation of a second excitation intensity,
wherein the first excitation intensity is chosen differently from the second excitation intensity based on information about the first and the second target, such that the fluorescence signal is in a linear working range of a detection unit of the real-time thermocycler (100, 200).

**8.** The method of claim 7, further comprising:
- obtaining information about the first and the second target,
- storing the obtained information about the first and the second target in a database (150), and
- adjusting the excitation intensity based on the information from the database (150).

**9.** The method of claim 8, wherein the obtaining the information about the first and second sample is performed by performing a measurement of the first and the second target, wherein in particular the performing the measurement includes measuring a fluorescence signal from the first and/or second sample.

**10.** A computer-readable storage medium storing program code, the program code comprising instructions that when executed by a processor carry out the method of one of claims 7 to 9.
